# EUROPEAN PATENT APPLICATION

(11) **EP 1 482 426 A2**
(43) Date of publication of application: **01.12.2004**
(21) Application number: 04012615.3
(22) Date of filing: 27.05.2004
(51) Int. Cl.: G06F 17/30

(54) **System and method of query transformation**

(30) Priority: 27.05.2003 CA 2429910
(71) Applicant: Cognos Incorporated, Ottawa, Ontario K1G 4k9 (CA)
(72) Inventor: Styles, Michael, Osgoode, Ontario K0A 2W0 (CA)
(74) Representative: Manitz, Finsterwald & Partner GbR

(57) **Abstract**

A group query transformation system for transforming sutured query language group query windowed aggregates is provided. The group query transformation system comprises a group query analysis module for analyzing one or more structured query language (SQL) / on-line analytical programming (OLAP) windowed aggregates that are not supported by a target database system, and a group query transformation module for transforming the one or more SQL/OLAP windowed aggregates into semantically equivalent standard aggregate functions that are supported by the target database system.

## Description

### FIELD OF THE INVENTION

The invention relates generally to data access middleware, and in particular to a system and method of query transformation.

### BACKGROUND OF THE INVENTION

A typical data access environment has a multi-tier architecture. For description purposes, it can be separated into three distinct tiers:
- Web server
- Applications
- Data
The tiers are based on business function, and are typically separated by firewalls. Client software, such as a browser or a report-authoring tool, sits above the tiers.

The web server contains a firewall and one or more gateways. All web communication is performed through a gateway. A gateway is responsible for passing on requests to the application server, in tier 2, for execution.

The applications tier contains one or more application servers. The application server runs requests, such as reports and queries that are forwarded by a gateway running on the web server. Typically, one of the components of the applications tier is a query engine, which is data access middleware that provides universal data access to a variety of heterogeneous database systems. The query engine formulates queries (Typically SQL) and passes them on to the data tier, through a native database API (such as ODBC) for execution.

The data tier contains database management systems (DBMS), which manage raw data stored in a database. Examples of such systems include Oracle, DB2, and Microsoft SQL Server.

Although a multi-tier architecture can be configured in several different ways, a typical configuration places each tier on a separate computer (server). A database server is typically a "high end" server, and thus can process queries at a relatively fast speed. An application server cannot generally process queries as quickly as a database server.

In order to solve many business questions, a query engine may generate SQL queries that utilize the SQL/OLAP technology introduced in the SQL-99 standard. However, many database systems do not support this technology. Thus, the SQL queries would have to be performed on the report server that is generally slower than the database server. It is desirable to have as much processing performed on the database server.

There is a need to prevent or reduce the amount of local (application server) processing required to process a a query. In the past, the application would be responsible for generating separate SQL queries involving the GROUP BY operator to compute aggregates over different partitions and stitching together the results. Quite often, this is quite difficult since it involves multiple queries and post processing.

One way of overcoming this problem is for the query engine to generate separate GROUP BY queries for aggregates computed over different partitions. generate a separate query to retrieve detail information, and then stitch together the results to produce the desired report. Unfortunately, this problem requires processing time on the report server. It is desirable to have a way of transferring the SQL queries to the database server with minimal processing on the report server.

### SUMMARY OF THE INVENTION

It is an object of the present invention to provide a method of structured query language group query transformation in a database system that does not support SQL-99 standard.

In accordance with an embodiment of the present invention, there is provided a group query transformation system for transforming structured query language group query windowed aggregates. The group query transformation system comprises a group query analysis module for analyzing one or more structured query language (SQL) / on-line analytical programming (OLAP) windowed aggregates that are not supported by a target database system, and a group query transformation module for transforming the one or more SQL/OLAP windowed aggregates into semantically equivalent standard aggregate functions that are supported by the target database system.

In accordance with another embodiment of the present invention, there is provided a method of transforming structured query language (SQL) group query windowed aggregates. The method comprises the steps of analyzing one or more SQL/ on-line analytical programming (OLAP) windowed aggregates that are not supported by a target database system, and transforming the one or more SQL/OLAP windowed aggregates into semantically equivalent standard aggregate functions that are supported by the target database system.

In accordance with another embodiment of the present invention, there is provided a method of group query transformation. The method comprises the steps of determining if a detailed table is required, traversing an aggregate list and assigning a group index to each aggregate based on the location of a control break in a control break list, determining a detail table Tₙ, traversing the control break list, traversing the select list and analyzing each expression and performing a specific action based on the type of expression encountered, and constructing a final query. For each control break in the control break list, the columns in the control break are added to a select list of a derived table, and for each column in the control break, a join condition of the form

Tₙ.Cⱼ - Tᵢ,Cⱼ OR (Tₙ.Cⱼ IS NULL AND Tᵢ.Cⱼ IS NULL)

is constructed.

In accordance with another embodiment of the present invention, there is provided a computer data signal embodied in a carrier wave and representing sequences of instructions which, when executed by a processor, cause the processor to perform a method of transforming structured query language (SQL) group query windowed aggregates. The method comprises the steps of analyzing one or more SQL/ on-line analytical programming (OLAP) windowed aggregates that are not supported by a target database system, and transforming the one or more SQL/OLAP windowed aggregates into semantically equivalent standard aggregate functions that are supported by the target database system.

In accordance with another embodiment of the present invention, there is provided a computer-readable medium having computer readable code embodied therein for use in the execution in a computer of a method of transforming structured query language (SQL) group query windowed aggregates. The method comprises the steps of analyzing one or more SQL/ on-line analytical programming (OLAP) windowed aggregates that are nor supported by a target database system, and transforming the one or more SQL/OLAP windowed aggregates into semantically equivalent standard aggregate functions that are supported by the target database system.

In accordance with another embodiment of the present invention, there is provided a computer program product for use in the execution in a computer of a group query transformation system for transforming structured query language (SQL) group windowed aggregates. The computer program product comprises a group query analysis module for analyzing one or more SQL/ on-line analytical programming (OLAP) windowed aggregates that are not supported by a target database system, and a group query transformation module for transforming the one or more SQL/OLAP windowed aggregates into semantically equivalent standard aggregate functions that arc supported by the target database system.

### BRIEF DESCRIPTION OF THE DRAWINGS

Figure 1 shows a typical data access environment.
Figure 2 shows a group query transformation system, in accordance with an embodiment of the present invention.
Figure 3 shows in a flowchart an example of a method of a group query transformation, in accordance with the group query transformation system.
Figure 4 shows in a flowchart another example of a method of group query transformation, in accordance with an embodiment of the group query transformation system.
Figure 5 shows in a flowchart another example of a method of group query transformation, in accordance with an embodiment of the group query transformation system.

### DETAILED DESCRIPTION OF THE PREFERRED EMBODIMENTS

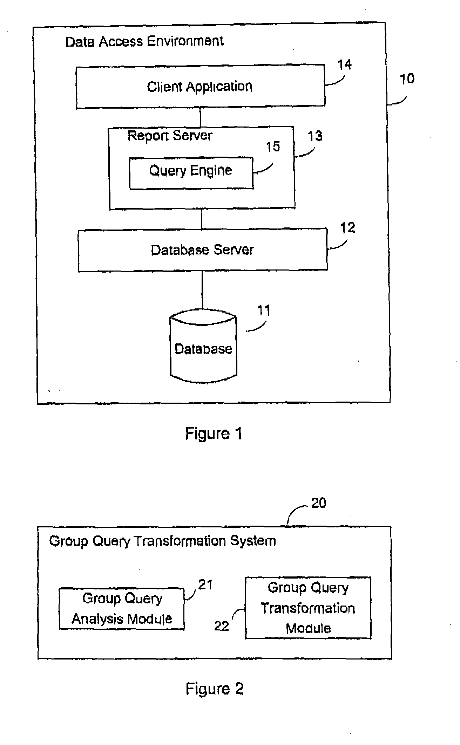

Figure 1 shows a typical data access environment 10 for processing data. Typically, data is stored in a database 11. A DBMS running on a database server 12 accesses the raw data stored in the database 11. A query engine 15, running on a report server (or application server) 13 is used to generate reports on the raw data and instruct the DBMS on the database server 12 to obtain information pertaining to the raw data in the database 11. The query engine 15 provides universal data access to a variety of heterogeneous database systems. An end user uses a client application 14, running on a client workstation, to facilitate application server 13 operations.

In order to solve many business questions, a query engine 15 generates SQL queries that utilize the SQL/online analytical programming (OLAP) technology introduced in the SQL-99 standard. These SQL queries include SQL/OLAP functions (windowed aggregates). However, many database systems 12 do not support this technology. In order to prevent or reduce the amount of local (application server) processing required to process these types of queries, the query engine 15 attempts to generate semantically equivalent queries that can be processed on the database server 12 by the target database system. These semantically equivalent queries include standard aggregate functions and the GROUP BY operator.

Figure 2 shows a group query transformation system 20, in accordance with an embodiment of the present invention. The group query transformation system 20 comprises a group query analysis module 21 for analyzing SQL/OLAP windowed aggregates that are not supported by a target database system, and a group query transformation module 22 for Transforming SQL/OLAP windowed aggregates into semantically equivalent standard aggregate functions that are supported by the target database system.

The group query transformation system 20 is implemented as a sub-system of the query engine 15 in the data access environment 10. This transformation 20 may generate queries that can be processed in their entirety on the database server 12, or queries that require processing on both the application server 13 and the database server 12.

Advantageously, the group query transformation system 20 reduces processing that might otherwise be required on the application server by generating a semantically equivalent query, thereby improving performance in many cases. Furthermore, the group query transformation system 20 takes advantage of functionality provided by the target database. In particular, the group query system 20 utilizes the functionality provided by standard aggregates and the GROUP BY operator.

Another advantage is that performing SQL group query transformation may eliminate any processing that may be required on the report server 13, since the group query transformation system 20 could end up generating a single query in the event that all SQL/OLAP functions map to a single aggregate.

There are two types of OLAP functions: framed functions and report functions-Framed OLAP functions contain a window frame specification (ROWS or RANGE) and an ORDER BY clause. Through window frames, capabilities such as cumulative (running) sums and moving averages can be supported. Report functions do not contain a window frame specification, and produce the same value for each row in a partition.

The group query transformation of a SQL-99 query involves mapping windowed OLAP functions into a semantically equivalent query involving derived tables and the standard GROUP BY clause.

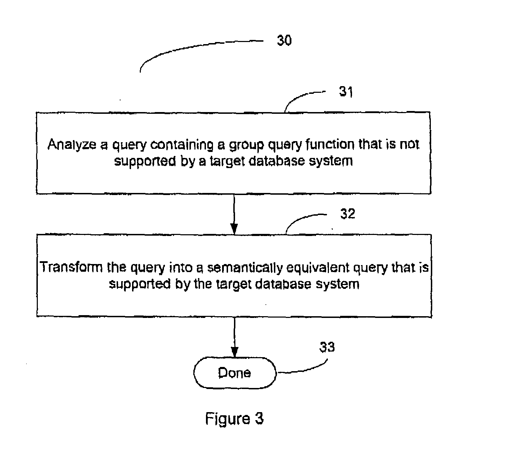

Figure 3 shows a flowchart of an example of a method of SQL group transformation (30), in accordance with an embodiment of the group query transformation system 20. The method (30) begins with analysing a query containing a group query that is not supported by a target database system (31). Next, the query is transformed into a semantically equivalent query that is supported by the target database system (32). The method (30) is done (33).

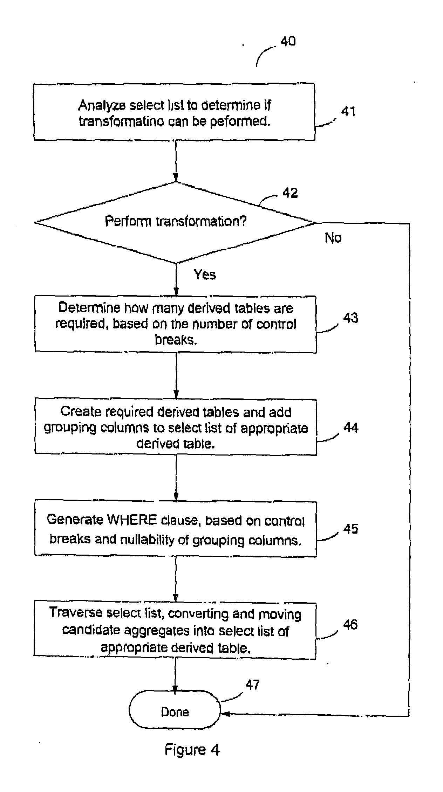

Figure 4 shows in a flowchart an example of a method of SQL group transformation (40), in accordance with an embodiment of the group query transformation system 20. The method (40) begins with analysing a group query select list to determine if transformations can be performed (41). A select list is a group of one or more expressions that define the required information for a particular query. If transformations cannot be performed (42), the method (40) is done (47). If a Transformation is to be performed (42), a number of derived tables required is determined based upon a number of partitions (or control breaks) (43). A control break is a set of columns over which a particular OLAP function is computed. A partition is a set of rows that have the same value for columns that make up the control break. The derived tables are created and grouping columns are added to an appropriate derived table select list (44). A WHERE clause is generated based upon partitions and nullabiliry of grouping columns (45). The group query select list is traversed and candidate aggregates are converted and moved into appropriate derived table select lists (46). The method is done (47),

As described above, the original query is first analyzed to determine what SQL/OLAP functions are present, which of these functions can be mapped to standard aggregates (MIN, MAX, SUM, AVG, COUNT, COUNT(*)), and what control breaks (partitions) exist (41). Each unique control break represents a separate derived table in the transformed query, and all functions with the same control break appear in the same derived table. The derived tables are then joined based on the columns that make up the longest (most columns) control break.

To determine if the transformation can be performed, all aggregates in the select list are analyzed. This analysis includes assigning a group index and keeping track of control breaks (or partitions). The group index indicates whether the aggregate is eligible for transformation. Any aggregate assigned a group index of -1 is not eligible. Control break information is stored in an ordered list, with control breaks having the fewest number of columns (least amount of detail) appearing first. Each unique control break represents a separate derived table in the transformed query.

Report aggregates (MIN, MAX, SUM, AVG, COUNT, and COUNT(*)) are eligible for Transformation, based on meeting certain criteria. A count of these aggregates (nSqlGroupAggrs) is maintained. This count is not incremented if a group index of -1 is assigned. Framed aggregates are not eligible for transformation.

A group index of -1 is assigned to report aggregates of the form:
AGG( C₀) OVER (AT C₁, C₂, ..., Cₘ PARTITION BY C₁, C₂, ..., Cₙ), where m < n or m > (n+1).
AGG( C₀ )OVER(AT C₁, C₂,...,Cₘ),where m > 1.
AGG( C₀ ) OVER (AT C₁), where C₁ ≠ C₀.
AGG( C₀ ) OVER (AT C₁, C₂, ..., Cₘ PARTITION BY C₁, C₂,.., Cₙ), where m = (n + 1), and Cₘ≠ C₀.

Otherwise, the group index assigned to the aggregate is positive (> 0) and based on the control break. All aggregates with an identical control break are assigned the same group index.

The following table gives examples of aggregates that are not eligible for transformation, as well as aggregates that are eligible for transformation

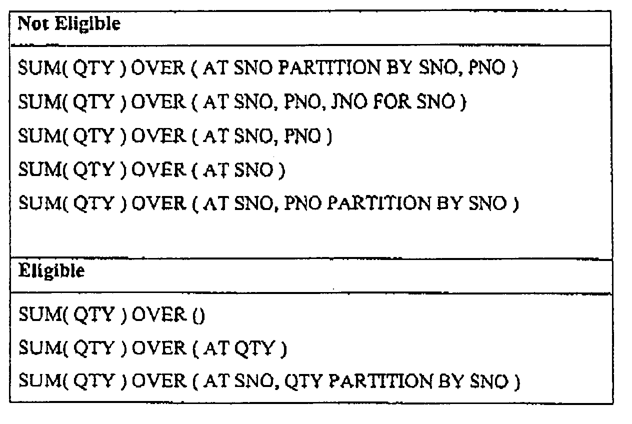

In addition to assigning a group index to all aggregates in the select list of the original query, this analysis phase determines a level of optimization. Level 1 optimization requires an additional derived table to be constructed to remove detail information, whereas Level 2 optimization does not require this additional derived table.

### Level 1:

To achieve Level 1 optimization, each of the following conditions must be met:
1. All aggregates are assigned a positive (> 0) group index.
2. All aggregate control breaks are compatible.
3. The total number of unique control breaks is equal to 1 or there are no aggregates in the select list that has a compute break (AT clause).

### Level 2:

To achieve Level 2 optimization, each of the following conditions must be met:
1. Level 1 optimization is possible.
2. DISTINCT was specified or GROUP BY was specified and the group list is compatible with the longest control break.
3. Any simple column referenced in the select list is part of the grouping list.

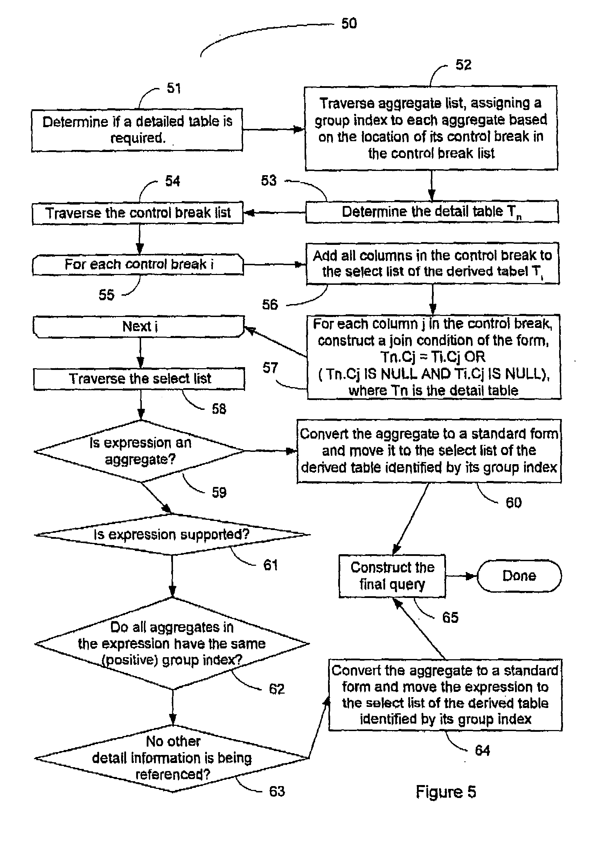

Figure 5 shows in a flowchart another example of a method of group query transformation (50), in accordance with an embodiment of the group query transformation system 20. The basic steps in performing the transformation are as follows:
1. Determine if a detail table is required (51) based on the level of optimization.
2. Traverse the aggregate list, assigning a group index to each aggregate based on the location of its control break in the control break list (52). This index identifies the derived table into which the aggregate is moved.
3. Determine the detail table ***T***_{*n*} (53). This is the table on which all join conditions are based.
4. Traverse the control break list (54), and for each control break ***i*** (55), perform the following:
   a. Add all columns in the control break to the select list of the derived table ***T***_{*i*} (56).
   b. For each column *j* in the control break, construct a join condition of the form ***T***_{*n*}*.**C***_{*j*}*=**T***_{*i*}***C***_{*j*} ***OR** (**T***_{*n*}*. **C***_{*j*} ***IS NULL AND T***_{*i*}*.**C***_{*j*} ***IS NULL**),* where ***T***_{*n*} is the detail table (57).
5. Traverse the select list (58), analyze each expression and perform a specific action based on the type of expression encountered
   a. If the expression is an aggregate (59), convert the aggregate to its standard form and move it to the select list of the derived table identified by its group index (60).
   b. Traverse all other expressions to determine if:
      i. The expression is supported by the target database (61).
      ii. All aggregates in the expression have the same (positive) group index (62).
      iii. No other detail information is being referenced (63).
   If these conditions are met, all aggregates in the expression are converted to their standard form, and the expression is moved to the select list of the derived table identified by the group index (64).
6. Construct the final query (65). The final query is consists of a simple join between all of the generated derived tables based on the condition constructed in step 4.

For the purpose of the following examples, assume the target database for each example does not support the SQL/OLAP technology introduced in the SQL-99 standard. The native SQL shown in each example is the SQL passed to the target database.

### Example I

In this example, the target database can process the transformed query in its entirety.

### Original Query

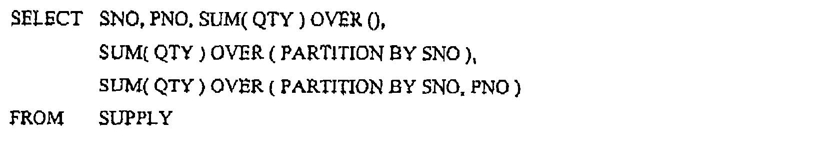

### Transformed Query

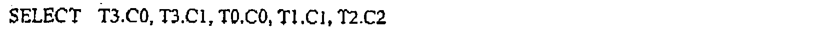

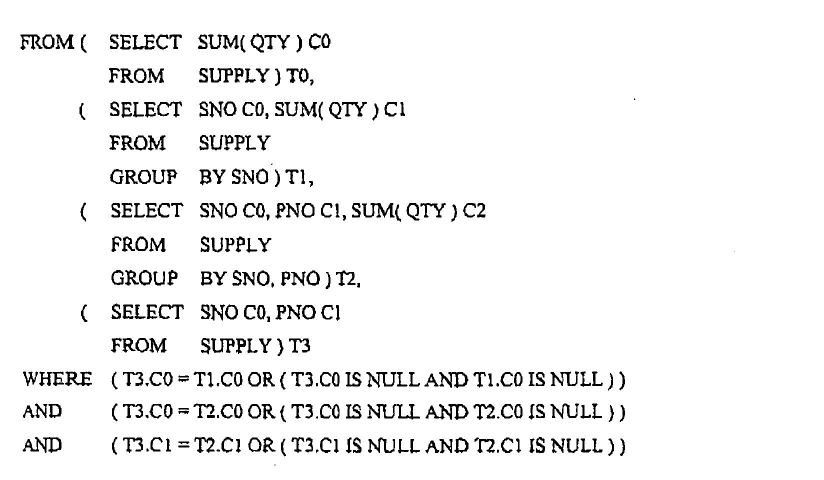

### Native SQL

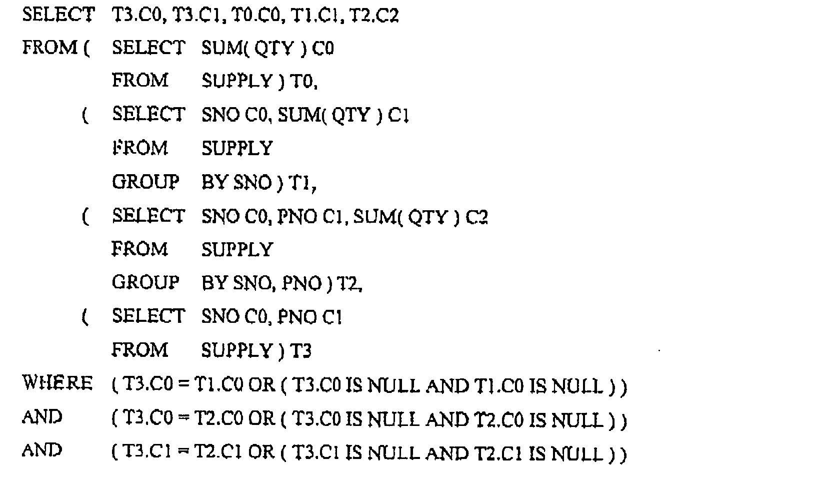

### Explanation

The original query contains OLAP SUM functions computed over the partitions 0, (SNO), and (SNO, PNO), with all detail information retained. Hence, four derived tables are required. Derived table T0 computes the overall sum, derived table T1 computes a sum for the (SNO) group, derived table T2 computes a sum for the (SNO, PNO) group, and finally, derived table T3 retrieves all detail information. These tables are then joined based on the grouping columns. When generating the WHERE clause, the algorithm must take into consideration whether or not a particular grouping column allows NULL values, In this example, it is assumed that all of the grouping columns allow null values. This corresponds to Level 1 optimization.

### Example 2

In this example, the target database can process the transformed query in its entirety. Note that with the presence of the DISTINCT keyword, one less derived table is generated since detail information is not required (this is an optimization performed by the query transformation).

### Original Query

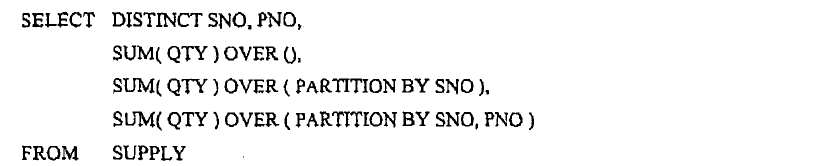

### Transformed Query

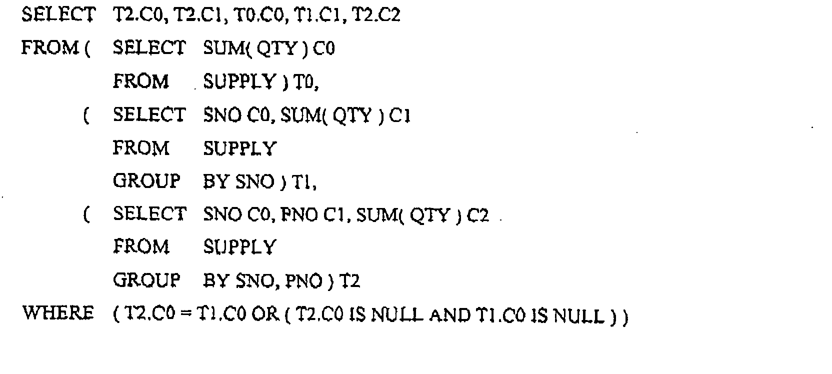

### Native SOL

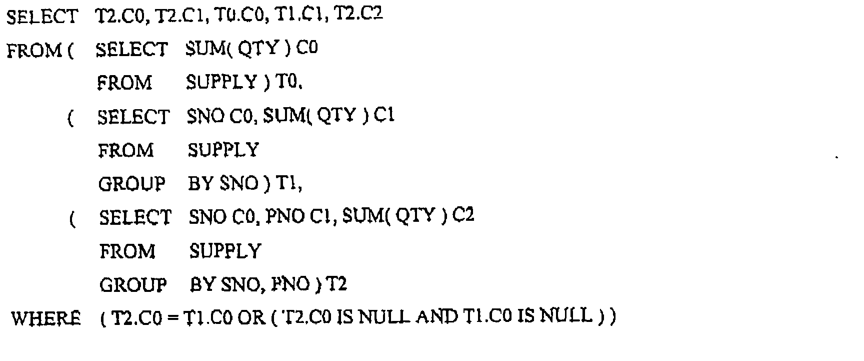

### Explanation

The original query is identical to that in Example 1, except that DISTINCT is specified. Hence, only three derived tables are required, since detail information is not being retained. Derived table T0 computes the overall sum, derived table T1 computes a sum for the (SNO) group, and derived table T2 computes a sum for the (SNO, PNO) group. This corresponds to Level 2 optimization.

### Example 3

In this example, the target database cannot process the transformed query in its entirety due to the presence of the RANK OLAP function. The SQL- server does not support this function, and it cannot be transformed into a standard aggregate specification.

### Original Query

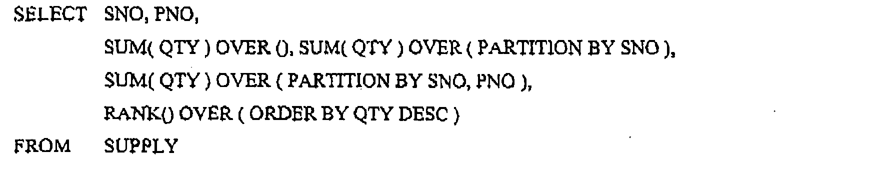

### Transformed Query

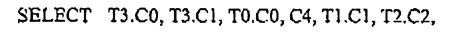

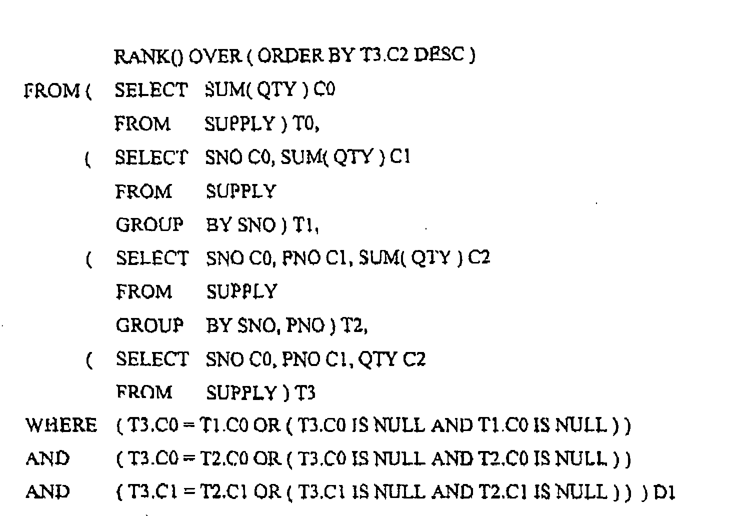

### Native SOL

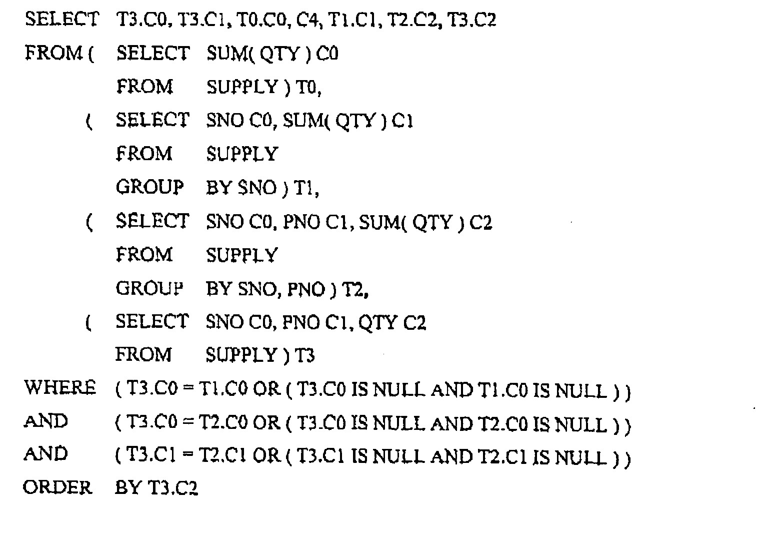

### Explanation

The original query is similar to that in Example 1, except for the RANK function being specified. Four derived tables are required which are identical to those generated for Example 1, except that derived table T3 contains the additional detail column QTY in the select list which is required to compute the RANK function (this OLAP function does not have a corresponding aggregate function). This corresponds to Level 1 optimization.

The systems and methods according to the present invention may be implemented by any hardware, software or a combination of hardware and software having the above-described functions. The software code, either in its entirety or a part thereof, may be stored in a computer readable memory. Further, a computer data signal representing the software code that may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A group query transformation system for transforming structured query language group query windowed aggregates, the system comprising:
a group query analysis module for analyzing one or more structured query language (SQL) / on-line analytical programming (OLAP) windowed aggregates that are not supporred by a target database system; and
a group query transformation module for transforming the one or more SQL/OLAP windowed aggregates into semantically equivalent standard aggregate functions that are supported by the target database system.

2. A method of transforming structured query language (SQL) group query windowed aggregates, the method comprising the steps of:
analyzing one or more SQL/ on-line analytical programming (OLAP) windowed aggregates that are not supported by a target database system; and
transforming the one or more SQL/OLAP windowed aggregates into semantically equivalent standard aggregate functions that are supported by the target database system.

3. The method as claimed in claim 2, wherein the step of analyzing includes the steps of:
determining if a transformation is to be performed; and
determining the number of derived tables required based upon the number of control breaks.

4. The method as claimed in claim 3, wherein the step of determining if a transformation is to be performed comprises the steps of:
assigning a group index; and
tracking control breaks.

5. The method as claimed in claim 2, wherein the step of transforming includes the steps of:
generating the derived tables;
adding grouping columns to derived table select lists;
generating a WHERE clause based upon control breaks and nullability of grouping columns;
traversing a group query select list; and
converting and moving candidate aggregates into the derived table select lists.

6. The method as claimed in claim 5, wherein the WHERE clause is of the form
T1.C1 = T2.C1 or (T1.C1 IS NULL and T2.C1 IS NULL) AND ... if grouping columns are nullable.

7. A method of group query transformation, the method comprising the steps of:
determining if a detailed table is required;
traversing an aggregate list and assigning a group index to each aggregate based on the location of a control break in a control break list;
determining a detail table Tₙ;
traversing the control break list and for each control break in the control break list:
adding all columns in the control break to a select list of a derived table; and
for each column in the control break, constructing a join condition of the form Tₙ-Cⱼ - Tᵢ.Cⱼ OR (Tₙ.Cⱼ IS NULL ANDTᵢCⱼ IS NULL);
traversing the select list and analyzing each expression and performing a specific action based on the type of expression encountered; and
constructing a final query.

8. A computer data signal embodied in a carrier wave and representing sequences of instructions which, when executed by a processor, cause the processor to perform a method of transforming structured query language (SQL) group query windowed aggregates, the method comprising the steps of:
analyzing one or more SQL/ on-line analytical programming (OLAP) windowed aggregates that are not supported by a target database system; and
transforming the one or more SQL/OLAP windowed aggregates into semantically equivalent standard aggregate functions that are supported by the target database system.

9. A computer-readable medium having computer readable code embodied therein for use in the execution in a computer of a method of transforming structured query language (SQL) group query windowed aggregates, the method comprising the steps of:
analyzing one or more SQL/ on-line analytical programming (OLAP) windowed aggregates that are not supported by a target database system; and
transforming the one or more SQL/OLAP windowed aggregates into semantically equivalent standard aggregate functions that are supported by the target database system.

10. A computer program product for use in the execution in a computer of a group query transformation system for transforming structured query language (SQL) group windowed aggregates, the computer program product comprising:
a group query analysis module for analyzing one or more SQL/ on-line analytical programming (OLAP) windowed aggregates that are not supported by a target database system; and
a group query transformation module for transforming the one or more SQL/OLAP windowed aggregates into semantically equivalent standard aggregate functions that are supported by the target database system.
